# EUROPEAN PATENT APPLICATION

(11) **EP 4 186 854 A1**
(43) Date of publication of application: **31.05.2023**
(21) Application number: 20945876.9
(22) Date of filing: 22.07.2020
(51) Int. Cl.: C01B 15/027, B01J 19/12, B01J 19/24, C02F 1/48

(54) **METHOD AND DEVICE FOR PRODUCING A HYDROGEN PEROXIDE SOLUTION**

(71) Applicant: Turbin, Valerij Vladimirovich, Moscow 119331 (RU); Strebkov, Dmitriy Semenovich, Moscow 125047 (RU); Budnik, Mihail Ivanovich, Krasnogorsk 143443 (RU); Vigdorchikov, Oleg Valentinovich, Balashikha 143989 (RU)
(72) Inventor: OVCHARENKO, Elena Nikolaevna, 44 Moscow, 129085 (RU); APASHEVA, Lyudmila Magomedovna, Moscow, 117312 (RU); LOBANOV, Anton Valerevich, Moscow, 119002 (RU); STREBKOV, Dmitriy Semenovich, Moscow, 125047 (RU); BUDNIK, Mihail Ivanovich, Opaliha, 143443 (RU); VIGDORCHIKOV, Oleg Valentinovich, Balashikha, 143989 (RU)
(74) Representative: Cueto, Sénida
(86) International application number: PCT/RU2020/000364
(87) International publication number: WO 2022/019795

(57) **Abstract**

The invention relates to inorganic chemistry, peroxides and agriculture, plant cultivation, medicine, sanitation and hygiene. The method and device for producing an environmentally friendly solution of hydrogen peroxide from water with a concentration exceeding the natural one in a reactor filled with water, consist in the fact that an electrode made of an electrically conducting material is installed above the water surface. The electrode is connected to the high-voltage terminal of a Tesla resonant transformer, and an electrode is supplied electric energy from a Tesla transformer with a voltage of 1-1000 kV and a frequency of 1-1500 kHz. The streamers of an electric discharge between the electrode, the air and the water surface are created with the formation of hydrogen peroxide in the water. While the reactor of closed or open types contains connecting pipes for supplying water and draining the hydrogen peroxide solution, which is intended for sanitization without dilution, disinfection and disinsection, and after dilution to a natural concentration, stimulates the growth and the development of plants.

An environmentally friendly solution of hydrogen peroxide of natural concentration can be used to increase the yield of cereals, melons and vegetables, as well as gardens and vineyards. The use of the obtained environmentally friendly solution of hydrogen peroxide is possible in medical practice for internal use.

## Description

The invention relates to inorganic chemistry, peroxides and agriculture, crop production, sanitation and hygiene, medicine, namely: to the field of physical impact on water, in which an environmentally friendly solution of hydrogen peroxide with a concentration exceeding natural one is formed, which is intended without dilution for sanitization, disinfection and disinsection, and after dilution to natural concentration - to stimulate the growth and development of plants by processing seed, plantings and plants. The use of the obtained environmentally friendly solution of hydrogen peroxide is possible in medical practice for internal use.

It is known that hydrogen peroxide (hydrogen peroxide H₂O₂) plays a decisive role in the life of plants (see Komissarov G.G. "Fotosintez: fiziko-khimicheskii podkhod" [Photosynthesis: physicochemical approach], Moscow: Editorial URSS, 2003, 224 p.(in Russian).

However, hydrogen peroxide, an aqueous solution of which could be used in agriculture, is not produced. Indeed, at present, an interstate standard is used to obtain hydrogen peroxide, which "applies to aqueous solutions of hydrogen peroxide obtained by the electrochemical method through persulfuric acid (medical and technical grade A) and by an organic method based on liquid-phase oxidation of isopropyl alcohol (technical grade B) "(See GOST 177-88" «Vodoroda perekis'. Tekhnicheskie usloviya" [Hydrogen peroxide. Specifications] (in Russian). As follows from GOST, hydrogen peroxide is intended for use in chemical, pulp and paper, textile, medical (for external use only!) and other industries, but not in agricultural production.

Despite the strictest observance of all possible precautions and the most careful accuracy in the production of hydrogen peroxide, the latter cannot nevertheless be isolated without any admixture of catalysts that cause the decomposition of hydrogen peroxide, which has long hampered its widespread technical application. The resistance of hydrogen peroxide is significantly increased by various stabilizing additives that are quite toxic to plants (for example, sulfuric acid, naphthalene, sulfonic acids, and others).

Meissner first discovered the presence of hydrogen peroxide in thunderstorm rain. He attributed its origin to lightning electrical discharges. To determine the content of hydrogen peroxide, Schöne very carefully studied the precipitation that fell near Moscow. He found that it is equal to 1 mg/l in thunderstorm rain (Pozin M.E. "Perekis' vodoroda i perekisnye soedineniya", Gosudarstvennoe izdatel'stvo nauchno-tekhnicheskoi literatury [Hydrogen peroxide and peroxide compounds ", State Publishing House of Scientific and Technical Literature] Leningrad, Moscow: GHI, 1951, p. 31).

In general, near Moscow for the period from 1874 to 1894. found that the content of H₂O₂ "in rainwater" 0.4-1 mg per 1 liter "(quoted by F.A. Brockhaus and I.A. Efron, article "Perekis' vodoroda" [Hydrogen peroxide]. St. Petersburg, 1898, Volume XXIII, p. 215).

For comparison, in the sea rain in the Gulf of Mexico, where there are frequent and more severe tropical thunderstorms, the concentration of hydrogen peroxide ranges from 114×10⁻⁷ to 820×10⁻⁷ mol/L, or from 0.4 to 2,8 mg/L with an average value of 402×10⁻⁷ mol/L, or 1.4 mg/L (Cooper W.J., Saltzman E.S., ZikaR.G. «The contribution of rainwater to variability in surface ocean hydrogen peroxide», J. Geophys. Res., 1987. V. 92. P. 2970. https://doi.org/10.1029/JC092iC03p02970), that is, the average value approaches the parameters of a thunderstorm near Moscow.

The possibility of the formation of hydrogen peroxide and ozone under conditions of thunderstorm activity is confirmed in the following studies.

So, in a lightning channel, an oxygen molecule can decay with the formation of atomic oxygen. Unlike oxygen molecules with stable intramolecular bonds, its atoms are chemically reactive and can form ozone molecules in the atmosphere, interact with hydrogen gases with the formation of OH and HOz hydroxyl radicals, hydrogen peroxide, etc. (Schumann U., Huntrieser H. «The global lightning-induced nitrogen oxides source», Atmos. Chem. Phys. 2007. V. 7. No 14. P. 3823-3907).

Also "the fact of sensing the smell of ozone after lightning discharges is well known, which is a sign of an increase in the concentration of ground-level ozone after thunderstorms" (quoted from Kolomeets L.I. "Obratnye svyazi mezhdu grozovoi aktivnost'yu, temperaturoi i sostavom atmosfery v troposfere i nizhnei stratosfere v global'nom i regional'nom masshtabakh" [Feedbacks between thunderstorm activity, temperature and atmospheric composition in the troposphere and lower stratosphere on a global and regional scale]. Dissertation for the degree of Candidate of Physico-Mathematical Sciences. St. Petersburg, 2018, p. 17).

There are known method and device for producing hydrogen peroxide using an electrodeless discharge of a Tesla coil in water vapor, followed by its condensation at a temperature of 81° K (-192.15° C) (Barton S.S., Groch F., Lipin S.E., Brittain D. «Variation of the evolved oxygen-gydrogen peroxide ratio with traversed volume and input power in the discharged water vapour system», J. Chem. Soc. A, 1968. P. 689-691. https://doi.org/10.1039/J19680000689).

The disadvantage of this method and device is the low yield of environmentally friendly hydrogen peroxide, the need to use water vapor and very low temperature for its condensation.

The objective of the present invention is to develop a method and device for producing an environmentally friendly solution of hydrogen peroxide with a concentration exceeding the natural one, which, after dilution to the natural concentration, is intended to stimulate the growth and development of plants.

The technical result consists in obtaining an environmentally friendly solution of hydrogen peroxide with a concentration exceeding the natural one, which, after dilution to the natural concentration, is suitable for stimulating the growth and development of plants.

The above technical result is achieved due to the fact that in the method for producing an environmentally friendly solution of hydrogen peroxide in a reactor filled with water, according to the invention, an electrode made of an electrically conductive material is installed in the reactor above the water surface, the electrode is connected to the high-voltage terminal of the Tesla transformer, and electrical energy is supplied to the electrode from Tesla transformer with a voltage of 1-1000 kV and a frequency of 1-1500 kHz, streamers of an electric discharge are created between the electrode, the air medium and the water surface with the formation of hydrogen peroxide in the water.

In a variant of the method for producing an environmentally friendly solution of hydrogen peroxide, an open-type reactor is used.

In another variant of the method for producing an environmentally friendly hydrogen peroxide solution, a closed-type reactor is used.

In other variant of the method for producing an environmentally friendly solution of hydrogen peroxide, the high-voltage terminal of the Tesla transformer is connected to a reactor made of an electrically conductive material.

In yet another variant of the method for producing an environmentally friendly solution of hydrogen peroxide, the reactor is filled with distilled water.

The technical result is also achieved by the fact that in a device for producing an environmentally friendly solution of hydrogen peroxide from water, containing a reactor filled with water, according to the invention, the reactor contains an electrode made of an electrically conductive material installed above the water surface, the electrode is connected to the high-voltage terminal of a Tesla transformer with a voltage of 1- 1000 kV and a frequency of 1-1500 kHz, the reactor contains branch pipes for supplying water and draining the hydrogen peroxide solution.

In a variant of the device for producing an environmentally friendly solution of hydrogen peroxide, the reactor is made of an electrically insulating material, for example, ceramic or glass, and contains another electrode installed in water and connected to grounding.

In another variant of the device for producing an environmentally friendly hydrogen peroxide solution, the reactor is made of an electroconductive material, for example, aluminum or stainless steel, and is connected to grounding.

In another embodiment of the device for producing an environmentally friendly solution of hydrogen peroxide, a reactor made of an electrically conductive material is used as an electrode connected to the high-voltage terminal of the Tesla transformer. Branch pipes for water supply and discharge of hydrogen peroxide solution are made of electroinsulating material.

The method and device for producing ecological hydrogen peroxide are illustrated on the FIGS. 1, 2, 3.

The fig. 1 shows a block diagram of a method and device when electric discharge streamers are formed between an electrode and the water surface in an open-type reactor. The fig. 2 shows the construction of a device with a closed-type reactor.

The fig. 3 shows a variant of the block diagram, when an open-type reactor made of an electrically conductive material is used as an electrode connected to the high-voltage terminal of the Tesla transformer, while streamers of an electric discharge are formed between the electrode-reactor and the air without contact with the water surface.

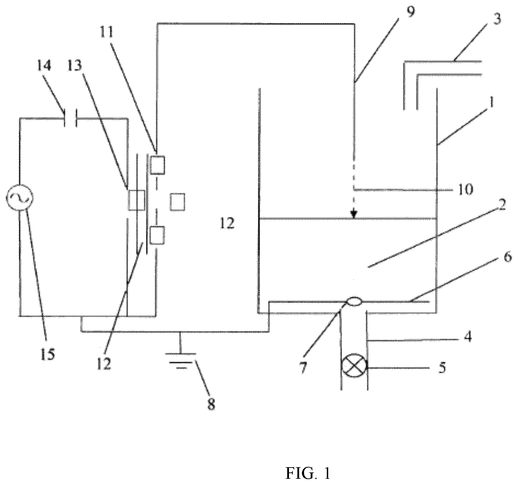

The open-type reactor in fig. 1 contains a reactor 1 made of electrical insulating material, filled with water 2, a branch pipe 3 for supplying water and a branch pipe 4 with a tap 5 through the hole 7 for draining the resulting hydrogen peroxide solution. At the bottom of the reactor 1, a conductive plate 6 is installed, which is connected to the grounding device 8. An electrical input in the form of an electrode 9 for the formation of streamers 10 is connected to the high-voltage output 11 of the Tesla resonant transformer 12. The low-voltage winding 13 of the Tesla transformer 12 together with the capacitance 14 forms a series resonant circuit, which is connected to the high-frequency power supply 15.

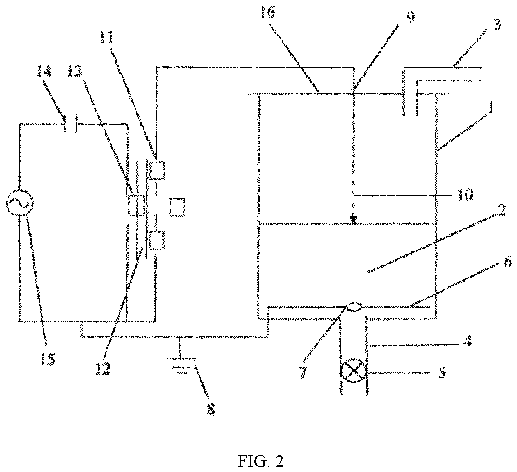

The fig. 2 shows a closed-type reactor 1 made of electrical insulating material, filled with water 2, is closed by a dielectric cover 16, which contains an electrode 9 for forming streamers 10 and a branch pipe 3 for supplying water. The rest of the designations are the same as on the fig. 1.

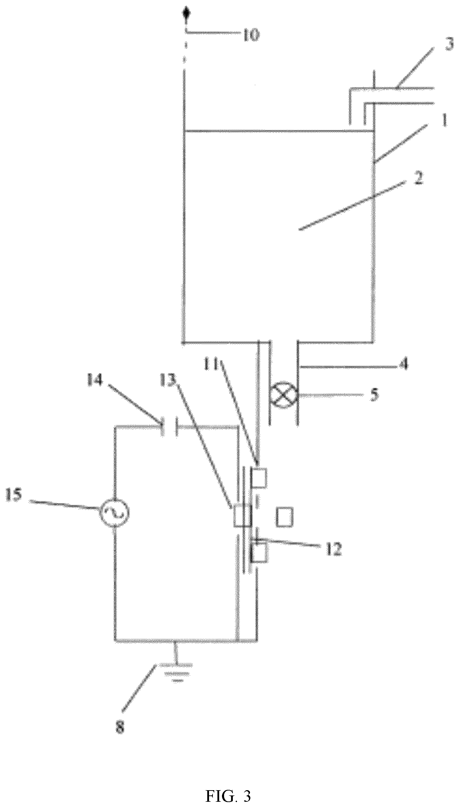

The fig. 3 shows an open-type reactor 1 made of an electrically conductive material, filled with water 2, is connected to the high-voltage terminal 11 of the Tesla transformer 12, the branch pipe 3 is made of electrical insulating material for supplying water and the branch pipe 4 is made of electrical insulating material with a tap 5 for draining the resulting hydrogen peroxide solution. The rest of the designations are the same as on the fig. 1.

The method and device for producing hydrogen peroxide from water is implemented as follows. When the potential is suppled on the fig. 1 from the high-voltage terminal 11 of the Tesla resonant transformer 12 to the electrical input 9, streamers 10 of an electric discharge arise between the electrode 9 and the surface of the water 2, while the electrical energy passes through the grounded conductive plate 6. Streamers 10 cause the decomposition of water molecules 2 with the formation of free radicals by the type of photodissociation, during the interaction of which hydrogen peroxide is formed. The fig. 2 shows a closed-type reactor filled with water 2 is closed with a cover 16, ozone is formed in its air space, which dissolves well in water and, being a highly reactive gas, additionally activates the processes of hydrogen peroxide formation from water. The maximum concentration of hydrogen peroxide solution is obtained in a closed-type reactor from an electrically insulating material. In this variant, the electrical power consumed by the Tesla 12 transformer is minimal. The fig. 3 shows a reactor 1 made of an electrically conductive material filled with water 2 is used as an electrode, streamers 10 of an electric discharge in the air above the water surface appear on the reactor 1, while electrical energy passes not only through the reactor 1 shell, but also directly through water 2, which dissociates into its constituent molecules with the formation of free radicals, the interaction of which forms hydrogen peroxide. In this variant, the electrical power consumed by the Tesla 12 transformer is maximal. The duration of the process of obtaining an ecological solution of hydrogen peroxide depends on the volume of water 2 in the reactor 1, the electric voltage and the frequency of the Tesla transformer 12.

The amount of hydrogen peroxide in water is determined using the iodometric method [Lobanov A.V., Rubtsova N.A., Vedeneeva Yu.A., Komissarov G.G. "Fotokataliticheskaya aktivnost' khlorofilla v obrazovanii peroksida vodoroda v vode" [Photocatalytic activity of chlorophyll in the formation of hydrogen peroxide in water] Reports of the Academy of Sciences, 2008. Vol. 421, No. 6. pp. 773-776].

Examples of implementation of the method and device for producing an environmentally friendly solution of hydrogen peroxide from water.

### Example 1.

The open-type stainless steel reactor on the fig. 1 is filled with 500 cm³ of distilled water. A stainless steel plate ~3×10 cm is used as a conductive plate at the bottom of the reactor. The voltage at the high-voltage terminal of the Tesla resonant transformer is 60 kV, the frequency is 1200 kHz, the electrical power consumed by the Tesla transformer is 75 W, the concentration of the hydrogen peroxide solution after 30 minutes is 1.0×10⁻⁴ mol/l, or 3.4 mg/l.

### Example 2.

The open-type reactor in FIG. 1 made of aluminum is filled with 500 cm³ of distilled water. A stainless steel plate with a size of ~3 × 10 cm is used as a conductive plate at the bottom of the reactor. The voltage at the high-voltage terminal of the Tesla resonant transformer is 60 kV, the frequency is 1200 kHz, the electrical power consumed by the Tesla transformer is 75 W, the concentration of the hydrogen peroxide solution after 30 minutes is 1.1 × 10⁻⁴ mol/L, or 3.7 mg/L.

### Example 3.

The open-type ceramic reactor in FIG. 1 is filled with 500 cm³ of distilled water. A stainless steel plate with a size of ~ 3 × 10 cm is used as a conductive plate at the bottom of the reactor. The voltage at the high-voltage terminal of the Tesla resonant transformer is 64 kV, the frequency is 1200 kHz, the electrical power consumed by the Tesla transformer is 84 W, the concentration of the hydrogen peroxide solution after 30 minutes is 1,4×10⁻⁴ mol/L, or 4.8 mg/L.

### Example 4.

The closed-type reactor in FIG. 2 made of stainless steel is filled with 500 cm³ of distilled water and 1500 cm³ of air. A stainless steel plate with a size of ~3×10 cm is used as a conductive plate at the bottom of the reactor.The voltage at the high-voltage terminal of the Tesla resonant transformer is 68 kV, the frequency is 1200 kHz, the electrical power consumed by the Tesla transformer is 85 W, the concentration of the hydrogen peroxide solution after 30 minutes is 1.8 × 10⁻⁴ mol/L, or 6.1 mg/L.

### Example 5.

The closed-type reactor in FIG. 2 made of aluminum has a 500 cm³ distilled water volume and 1500 cm³ air volume. A stainless steel plate with a size of ~3×10 cm is used as a conductive plate at the bottom of the reactor. The voltage at the high-voltage terminal of the Tesla resonant transformer is 68 kV, the frequency is 1200 kHz, the electrical power consumed by the Tesla transformer is 85 W, the concentration of the hydrogen peroxide solution after 30 minutes is 1.9 × 10⁻⁴ mol/L, or 6.5 mg/L.

### Example 6.

The closed-type reactor in FIG. 2 made of ceramics has a 500 cm³ distilled water volume and 1500 cm³ air volume. A stainless steel plate with a size of ~3 × 10 cm is used as a conductive plate at the bottom of the reactor. The voltage at the high-voltage terminal of the Tesla resonant transformer is 64 kV, the frequency is 1200 kHz, the electrical power consumed by the Tesla transformer is 84 W, the concentration of the hydrogen peroxide solution after 30 minutes is 3.0 × 10⁻⁴ mol/L, or 10.2 mg/L.

### Example 7.

The open-type reactor in FIG. 3 made of aluminum is filled with 500 cm³ of distilled water. The voltage at the high-voltage output of the Tesla resonant transformer is 100 kV, the frequency is 1200 kHz, the electrical power consumed by the Tesla transformer is 370 W, the concentration of hydrogen peroxide solution after 30 minutes is 1.1 × 10⁻⁴ mol/L, or 3.7 mg/L.

Thus, the concentration of an environmentally friendly solution of hydrogen peroxide in an open-type reactor made of an electrically conducting material ranges from 1.0×10⁻⁴ mol/L, or 3.4 mg/L to 1.1 × 10⁻⁴ mol/L, or 3.7 mg/L, and in case of the reactor made of an electrical insulating material is 1.4 × 10⁻⁴ mol/L, or 4.8 mg/L.

The concentration of an environmentally friendly solution of hydrogen peroxide in a closed-type reactor made of an electrically conducting material ranges from 1.8×10⁻⁴ mol/L, or 6.1 mg/L to 1.9 × 10⁻⁴ mol/L, or 6.5 mg/L, and in case of the reactor made of an electrical insulating material is 3.0 × 10⁻⁴ mol/L, or 10.2 mg/L.

The use of environmentally friendly hydrogen peroxide in seed farming.

The study of the growth-regulating properties of the obtained hydrogen peroxide solution was carried out using model experiments under stress conditions, when the hydrogen peroxide solution was the only medium without additives for plants cultivation in closed vessels isolated from the environment. The plants cultivation was carried out in glass culture vessels with ground-in lids, which were embedded in paraffin for additional conservation. The vessels per plant had the following parameters:
bottom area: 1.4 cm².
air volume: 4.4 ml.

A cucumber plant (pumpkin family, variety "Cascade") was used as a test object. All seeds were pre-germinated in distilled water. The viable seeds were selected and placed in culture vessels with the corresponding amount of hydrogen peroxide solutions in the experimental groups and distilled water in the control one. The filled vessels were placed in a luminostat, in which the following conditions were observed: +20 ± 1°C of air temperature, the light/dark lighting rhythm have been alternated every 12 hours.

0.2 ml distilled water per plant was added to the control culture vessel (K).

0.2 ml hydrogen peroxide solutions per plant were also added into three experimental culture vessels using three different concentrations after appropriate dilution of the resulting environmentally friendly solution of hydrogen peroxide with a concentration exceeding the natural one, namely:
- into the first experimental culture vessel (O₁): a hydrogen peroxide solution with a concentration of 8.0×10⁻⁵ mol/l, or 2.7 mg/l, which corresponds to the maximum concentration in sea rain in the Gulf of Mexico;
- into the second experimental culture vessel (O₂): a hydrogen peroxide solution with a concentration of 1.6×10⁻⁵ mol/l, or 0.54 mg/l, which corresponds to ½ concentration in thundershower in Moscow region;
- into the third experimental culture vessel (O₃): a hydrogen peroxide solution with a concentration of 8.0×10⁻⁶ mol/l, or 0.27 mg/l, which is near the lower concentration limit in rainwater in the environs of Moscow.

The concentrations of hydrogen peroxide solutions in the experimental groups in relation to the maximum concentration, that is, to O₁ (8.0×10⁻⁵ mol/l, or 2.7 mg/l) were correlated as 1/5 (O₁/O₂) and 1/10 (O₁/O₃).

In all experimental and control groups, the conditions of plant cultivation were identical.

The degree of plants condition development was assessed at a certain time on days 5, 8, 30. It was recorded the number of plants in percent with an open cotyledonary leaf on the 5th day, with a plant height of h≤ < 2 cm on the 8th day, with a loss of turgor, which died on the 30th day of the experiment.

The results are shown in the Table 1.

**Table 1 - The changes in the morphological parameters of "Cascade" cucumber variety plants cultivated for 30 days in a closed volume**

| Control and experimental groups | Number of plants, % | | |
|---|---|---|---|
| | day 5, the presence of a cotyledonary leaf | day 8, plant height h ≤ 2 cm | day 30, loss of turgor, dead |
| κ | 40 | 20 | 100 |
| O₁ | 100 | 100 | 90 |
| O₂ | 100 | 100 | 80 |
| O₃ | 30 | 20 | 100 |

It was found that an environmentally friendly solution of hydrogen peroxide with a concentration exceeding the natural one, which after dilution to a natural concentration from 8.0×10-5 mol/l, or 2.7 mg/l (group O₁) to 1.6×10^{- 5} mol/l, or 0.5 mg/l (O₂ group) provides a significant stimulation of plant growth and plant development even under stressful conditions of a closed volume, in particular, the percentage of plants with a cotyledonary leaf in the O₁ and O₂ experimental groupsis 2.5 times higher than in the control on the 5th day, and the percentage of plants with a height of h≤ < 2 cm on the 8th day in the same experimental groups exceeds this indicator in the control group in 5 times.

A control measurement of the concentration of the obtained diluted solutions of hydrogen peroxide was carried out for a month, provided it was stored in a refrigerator at + 4°C without any stabilizing additives: the concentration remained unchanged in this case, which is consistent with the data of D.I. Mendeleev: "The weaker the solution of hydrogen peroxide in water, the more constant it is." (citation by Mendeleev D. "Fundamentals of Chemistry". 7th edition, revised and enlarged again. SAINT PETERSBURG. Typographic lithography by M.P. Frolova. Galernaya Street, #6. 1903 -- S. 152 pp.

Thus, the proposed method and device based on the use of a Tesla resonant transformer to obtain from water an environmentally friendly solution of hydrogen peroxide with a concentration, exceeding a natural one, which, without dilution, is intended for sanitization, disinfection and disinsection, and after dilution to a natural concentration, it stimulates the growth and the development of plants, including under stress of an isolated environment of a closed volume. An environmentally friendly solution of hydrogen peroxide of natural concentration can be used to increase the yield of cereals, melons and vegetables, as well as gardens and vineyards. The use of the resulting environmentally friendly solution of hydrogen peroxide is possible in medical practice for internal use.

## Claims

1. A method of producing an environmentally friendly solution of hydrogen peroxide with a concentration exceeding the natural one in a reactor filled with water, **characterized in that** an electrode made of an electrically conducting material is installed above the water surface. The electrode is connected to the high-voltage output of a Tesla resonant transformer, and electrical energy is supplied to the electrode from a Tesla transformer with a voltage of 1-1000 kV and a frequency of 1-1500 kHz. The streamers of an electric discharge are created between the electrode, the air and the water surface with the formation of hydrogen peroxide in the water.

2. Method for producing an environmentally friendly hydrogen peroxide solution according to claim 1, **characterized in that** an open-type reactor is used.

3. Method for producing an environmentally friendly hydrogen peroxide solution according to claim 1, **characterized in that** a closed-type reactor is used.

4. Method for producing an environmentally friendly hydrogen peroxide according to claim 1, **characterized in that** the high-voltage output of the Tesla transformer is connected to a reactor made of electrically conducting material.

5. Method for producing an environmentally friendly hydrogen peroxide according to claim 1, **characterized in that** the reactor is filled with distilled water.

6. A device for producing an environmentally friendly solution of hydrogen peroxide from water, containing a reactor filled with water, **characterized in that** the reactor contains an electrode made of an electrically conducting material mounted above the water surface. The electrode is connected to the high-voltage output of the Tesla resonant transformer with a voltage of 1-1000 kV and a frequency of 1-1500 kHz, the reactor contains connecting pipes for supplying water and draining the hydrogen peroxide solution.

7. The device for producing an environmentally friendly hydrogen peroxide solution according to claim 6, **characterized in that** the reactor is made of an electrically insulating material, for example, ceramic or glass, and contains another electrode installed in water and connected to ground.

8. The device for producing an environmentally friendly solution of hydrogen peroxide according to claim 6, **characterized in that** the reactor is made of an electrically conducting material, for example, aluminum or stainless steel, and connected to ground.

9. The device for producing an environmentally friendly solution of hydrogen peroxide according to claim 6, **characterized in that** a reactor made of an electrically conducting material is used as an electrode connected to the high-voltage output of the Tesla transformer, connecting pipes for supplying water and draining a solution of hydrogen peroxide are made of an electrically insulating material.
